# EUROPÄISCHE PATENTSCHRIFT

(11) **EP 3 743 934 B1**
(45) Veröffentlichungstag und Bekanntmachung des Hinweises auf die Patenterteilung: **06.04.2022**
(21) Anmeldenummer: 19706598.0
(22) Anmeldetag: 20.02.2019
(51) Int. Cl.: H01H 9/00, H01F 29/04

(54) **LASTSTUFENSCHALTER UND ORTSNETZTRANSFORMATOR MIT EINEM LASTSTUFENSCHALTER**
ON-LOAD TAP CHANGER AND LOCAL NETWORK TRANSFORMER HAVING AN ON-LOAD TAP CHANGER
RÉGLEUR EN CHARGE ET TRANSFORMATEUR DE RÉSEAU DE PARTITION POURVU D'UN RÉGLEUR EN CHARGE

(30) Priorität: 06.03.2018 DE 102018105097
(43) Veröffentlichungstag der Anmeldung: 02.12.2020
(73) Patentinhaber: Maschinenfabrik Reinhausen GmbH, 93059 Regensburg (DE)
(72) Erfinder: HAMMER, Christian, 93059 Regensburg (DE); SACHSENHAUSER, Andreas, 84066 Mallersdorf (DE); DALLA VECCHIA, Riccardo, 36075 Montecchio Maggiore (IT)
(86) Internationale Anmeldenummer: PCT/EP2019/054209
(87) Internationale Veröffentlichungsnummer: WO 2019/170417

(56) Entgegenhaltungen:
- WO-A1-2013/185961
- DE-A1-102012 103 490
- US-A- 3 673 364

## Beschreibung

Die Erfindung betrifft einen Laststufenschalter sowie einen Ortsnetztransformator mit einem Laststufenschalter.

DE 10 2012 103490 A1 offenbart einen Laststufenschalter, umfassend einen ersten Wählerschlitten und einen zweiten Wählerschlitten, ein Schaltmittel und ein Getriebe, wobei der erste Wählerschlitten und der zweite Wählerschlitten kollinear angeordnet sind, wobei das Getriebe dazu eingerichtet ist die Wählerschlitten während einer Umschaltung von einem Wählerkontakt auf einen benachbarten Wählerkontakt in eine erste Richtung zu bewegen und das Schaltmittel zu betätigen.

Die Regelung von Ortsnetztransformatoren gewinnt auf Grund des Anstiegs von alternativen Energieerzeugern, wie z.B. Windkraftanlagen oder Photovoltaikanlagen, im Niederspannungsnetz bzw. Mittelspannungsnetz immer mehr an Bedeutung. Herkömmliche Laststufenschalter, die in Hochspannungstransformatoren eingesetzt werden, sind für Ortsnetztransformatoren, allein schon wegen ihrer Größe, nicht geeignet.

Es ist daher eine Aufgabe der vorliegenden Erfindung einen besonders kompakten und zuverlässigen Laststufenschalter für Stufentransformatoren, insbesondere Ortsnetztransformatoren, sowie einen Ortsnetztransformator mit einem Laststufenschalter zu schaffen.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Die Erfindung schlägt einen Laststufenschalter vor, der
- einen ersten Wählerstab und einen zweiten Wählerstab;
- einen Lastumschalterstab;
- ein Schaltmittel und
- ein Getriebe umfasst;
   wobei
- der erste Wählerstab, der zweite Wählerstab und der Lastumschalterstab kollinear angeordnet sind;
- das Getriebe dazu eingerichtet ist
   - die Wählerstäbe während einer Umschaltung von einem Wählerkontakt auf einen benachbarten Wählerkontakt in eine erste Richtung zu bewegen;
   - den Lastumschalterstab während der Umschaltung in die erste Richtung und eine zweite Richtung, die entgegen der ersten Richtung ist, zu bewegen um das Schaltmittel zu betätigen.

Der erfindungsgemäße Laststufenschalter weist zwei Wählerstäbe auf, die dem Aufbau eines Umstellers ähneln und dadurch eine kompakte Bauweise ermöglichen. Mittels eines Lastumschalterstabes wird auf einfache, kostengünstige und bauraumsparende Weise eine Möglichkeit geschaffen, Umschaltungen unter Last, d.h. während des Betriebs des Stufentransformators, schnell und sicher durchzuführen. Dabei ermöglicht das Getriebe des Laststufenschalters, dass die Wählerstäbe und der Lastumschalterstab zur richtigen Zeit bewegt werden und eine Umschaltung durchführen. Um eine besonders kompakte Bauweise zu ermöglichen, wird der Lastumschalterstab für die Betätigung des Schaltmittels in eine erste Richtung und eine zweite Richtung, die entgegen der ersten Richtung ist, bewegt. Die Wählerstäbe und der Lastumschalterstab sind dabei kollinear angeordnet. Auch diese Ausgestaltung erlaubt es sämtliche Teile des Laststufenschalters platzsparend anzuordnen und dabei die Funktionalität und eine hohe Sicherheit zu gewährleisten. Die Wählerstäbe und/oder der Lastumschalterstab können jeweils einteilig oder mehrteilig ausbildet sein.

Gemäß wenigstens einer Ausführungsform umfasst das Getriebe ein erstes Antriebsritzel sowie ein erstes Abtriebsritzel wobei eine Antriebswelle den ersten Wählerstab über das erste Antriebsritzel und das erste Abtriebsritzel während der Umschaltung bewegt.

Gemäß wenigstens einer Ausführungsform umfasst das Getriebe ein zweites Antriebsritzel und ein zweites Abtriebsritzel wobei die Antriebswelle den zweiten Wählerstab über das zweite Antriebsritzel und das zweite Abtriebsritzel während der Umschaltung bewegt.

Gemäß wenigstens einer Ausführungsform umfasst das Getriebe eine Kurbel und ein Pleuel wobei die Antriebswelle den Lastumschalterstab über die Kurbel und das Pleuel bewegt und damit das Schaltmittel während der Umschaltung betätigt. Das Schaltmittel kann jedoch auch direkt über den Lastumschalterstab betätigbar ausgestaltet sein.

Weiterhin kann vorgesehen sein, dass
- der Lastumschalterstab eine Nockenkontur aufweist,
- das Schaltmittel mit einem Umlenkhebel mechanisch verbunden ist,
- das Schaltmittel während der Umschaltung über den Umlenkhebel und die Nockenkontur betätigt wird.

Gemäß wenigstens einer Ausführungsform fährt der Umlenkhebel die Nockenkontur während der Betätigung des Schaltmittels zumindest teilweise ab. Hierfür kann der Umlenkhebel eine Rolle umfassen.

Weiterhin kann vorgesehen sein, dass das Getriebe dazu eingerichtet ist während der Umschaltung ein weiteres Schaltmittel zu betätigen. Dabei kann der Lastumschalterstab das weitere Schaltmittel umfassen. Das weitere Schaltmittel kann wenigstens einen Kontakt umfassen und als Brückenschalter ausgebildet ist.

Weiterhin kann vorgesehen sein, dass das Getriebe dazu eingerichtet ist während der Umschaltung den ersten Wählerstab in die erste Richtung zu bewegen, danach den Lastumschalterstab in die erste und die zweite Richtung zu bewegen und danach den zweiten Wählerstab in die erste Richtung zu bewegen.

Weiterhin kann vorgesehen sein, dass das Getriebe dazu eingerichtet ist während der Umschaltung den Lastumschalterstab mehrmals in die erste und/oder mehrmals die zweite Richtung zu bewegen.

Weiterhin kann vorgesehen sein, dass der Lastumschalterstab während der Umschaltung das Schaltmittel öffnet und schließt.

Weiterhin kann vorgesehen sein, dass das Getriebe als Maltesergetriebe ausgebildet ist.

Weiterhin können die Grundplatte und/oder Antriebswelle und/oder Getriebe und/oder die Wählerstäbe und/oder die Antriebsritzel und/oder die Abtriebsritzel und/oder der Lastumschalterstab und/oder die Kurbel und/oder das Pleuel und/oder der Umlenkhebel und/oder die Rolle aus einem elektrisch nicht leitfähigem Material wie z.B. Hartpapier oder GFK ausgebildet sein.

Gemäß der Erfindung wird ein Ortsnetztransformator angegeben, der eine erfindungsgemäßen Laststufenschalter umfasst.

Die Zeichnungen zeigen in
- FIG.°1: einen erfindungsgemäßen Laststufenschalter
- FIG°2: eine Ausführungsform eines Getriebes im Laststufenschalter
- FIG.°3: eine detaillierte Ansicht des Getriebes
- FIG.°4: eine weitere detaillierte Ansicht des Getriebes
- FIG.°5: eine Ausführungsform einer Betätigung eines Schaltmittels
- FIG.°6: einen Ortsnetztransformator mit einem Laststufenschalter.

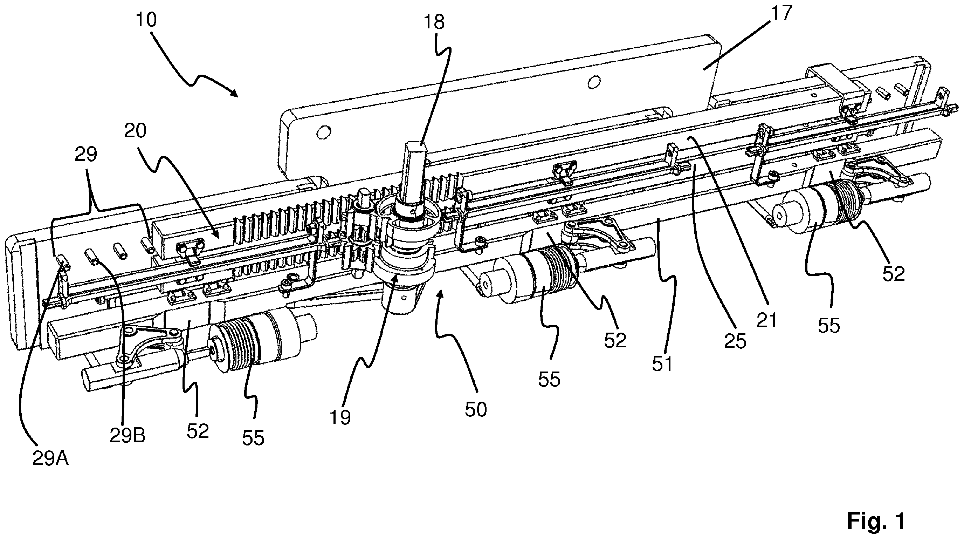

In FIG. 1 ist ein Laststufenschalter 10 mit einem Wähler 20 und einem Lastumschalter 50 dargestellt. Der Laststufenschalter 10 wird mittels einer Antriebswelle 18 über ein Getriebe 19 betätigt. Der Wähler 20 umfasst dabei einen ersten Wählerstab 21 und einen zweiten Wählerstab 25. Der Lastumschalter 50 umfasst einen Lastumschalterstab 51. Da die dargestellte Ausführungsform des Laststufenschalters 10 dreiphasig ausgestaltet ist, weist der Lastumschalter 50 je ein Schaltmittel 55 für je eine Phase auf. Jedes Schaltmittel 55 kann als Vakuumschaltröhre, Halbleiterschalter oder aus einfachen Kontakten ausgebildet sein. Die Antriebswelle 18 bewegt über das Getriebe 19 den ersten und den zweiten Wählerstab 21, 25 sowie den Lastumschalterstab 51. Der Lastumschalter 50 und der Wähler 20 sind auf einer Grundplatte 17 angeordnet. In der Grundplatte 17 sind außerdem mehrere Wählerkontakte 29 eingebracht. Die Wählerkontakte 29 sind mit, hier nicht gezeigten, Wicklungsanzapfungen 70 einer Regelwicklung 71 eines Stufentransformators 72, insbesondere Ortsnetztransformators, verbunden.

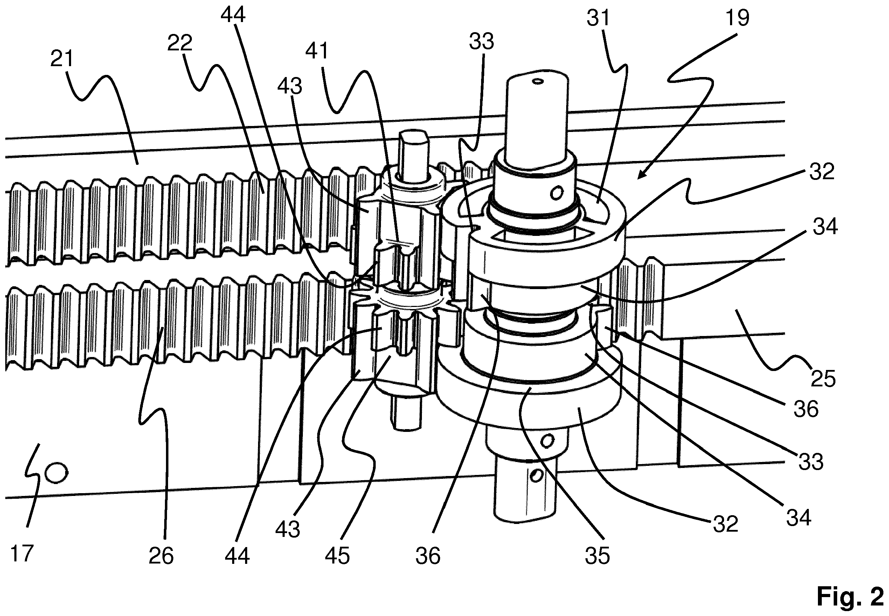

In FIG. 2 ist das Getriebe 19 im Bereich des Wählers 20 mit einem ersten und zweiten Antriebsritzel 31, 35 sowie einem ersten und zweiten Abtriebsritzel 41, 45 abgebildet. Weiterhin ist zu sehen, dass der erste und der zweite Wählerstab 21, 25 auf jeweils einer, dem Getriebe zugewandten Seite einen verzahnten Bereich 22, 26 aufweisen.

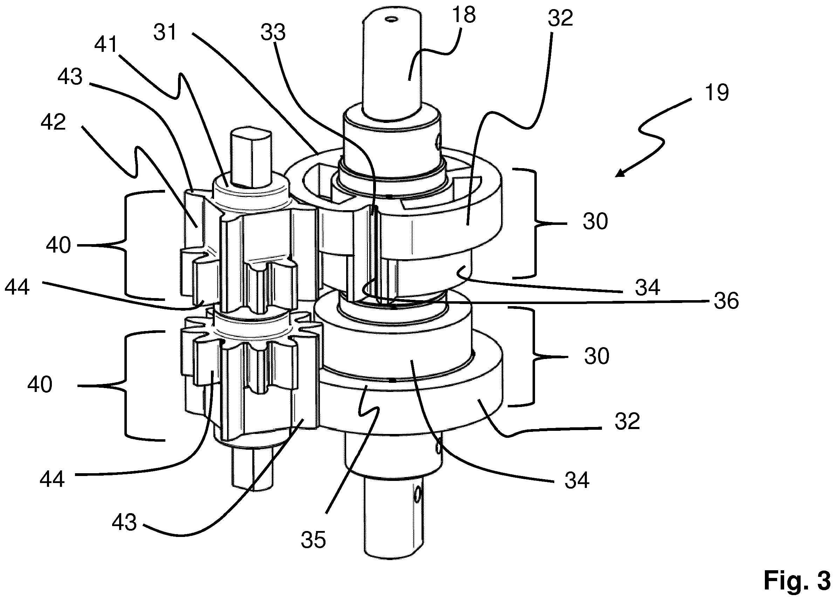

In FIG. 3 ist eine detaillierte Ansicht des Getriebes 19 dargestellt. Die Außenfläche 30 des ersten Antriebsritzels 31 ist in zwei Teile 32, 34 unterteilt. Der erste Teil 32 der Außenfläche 30 weist eine Kerbe 33 und der zweite Teil 34 weist zwei Zähne 36 auf, wobei die Kerbe 33 des ersten Teils 32 zwischen den zwei Zähnen 36 des zweiten Teils 34 verläuft. Dies gilt analog für das zweite Antriebsritzel 35. Die Antriebsritzel 31, 35 sind gespiegelt untereinander an der Antriebswelle 18 angeordnet.

Die Außenfläche 40 des ersten Abtriebsritzels 41 ist in zwei Teile 42, 44 unterteilt. Der erste Teil 42 weist vier, symmetrisch verteilte, Zähne 43 auf. In einem zweiten Teil 44 ist das Abtriebsritzel 41 gleichmäßig verzahnt. Die vier symmetrisch verteilten Zähne 43 gehen homogen in den zweiten verzahnten Teil über. Dies gilt analog für das zweite Abtriebsritzel 45. Die Abtriebsritzel 41, 45 stehen über die teileverzahnten Bereiche 22, 26 in Wirkverbindung mit den Wählerstäben 21, 25.

Das Getriebe 19 ermöglicht es, die Wählerstäbe 21, 25 während einer Umschaltung von einem Wählerkontakt 29A auf einen benachbarten Wählerkontakt 29B in eine erste Richtung zu bewegen (siehe FIG. 1). Bei einer nachfolgenden Umschaltung werden die Wählerstäbe 21, 25 entweder in die selbe erste Richtung oder eine zweite, entgegengesetzte Richtung bewegt, also von Wählerkontakt 29B auf den benachbarten Wählerkontakt 29A.

Die Kombination aus einem Wählerstab 21, 25, einem Abtriebsritzel 41, 45 und einem Antriebsritzel 31, 36 ermöglicht es, die kontinuierliche Rotationsbewegung der Antriebswelle 18 in eine lineare und/oder schrittweise Bewegung des Wählerstabes 21, 25 in eine erste Richtung umzuwandeln. Dadurch, dass das erste und das zweite Antriebsritzel 31, 35 versetzt zu einander an der Antriebswelle 18 angeordnet sind, erfolgt eine zeitlich versetzte Bewegung der beiden Wählerstäbe 21, 25 zueinander. Weiterhin verhindern die jeweiligen ersten Teile 32, 42 der Antriebsritzel 31, 35 und der Abtriebsritzel 41, 45, die Bewegung des jeweiligen Wählerstabes 21, 25 außerhalb einer Umschaltung. Die Außenflächen 30 mit der Kerbe 33 der Antriebsritzel 31, 35 und die vier Zähne 43 der Abtriebsritzel 41, 45 schaffen eine Verdrehsicherung. Das Getriebe 19 kann auch als Maltesergetriebe ausgeführt werden.

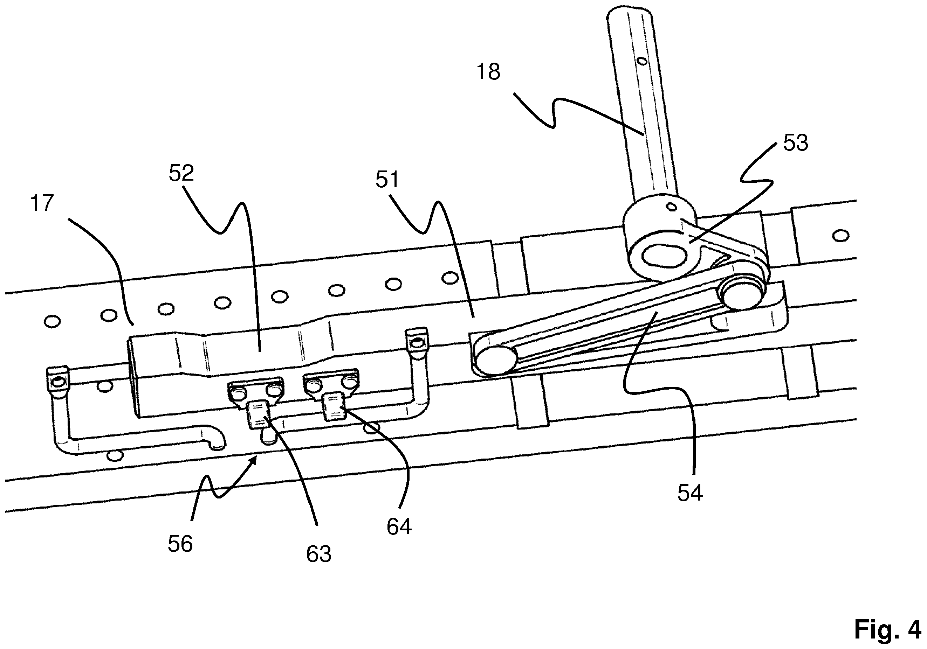

In FIG. 4 ist die Antriebswelle 18 mit einer Kurbel 53 und einem Pleuel 54 dargestellt. Das Pleuel 54 ist an einem ersten Ende mit der Kurbel 53 und an einem zweiten Ende mit dem Lastumschalterstab 51 mechanisch verbunden. Durch Drehung der Antriebswelle 18 wird der Lastumschalterstab 51 über die Kurbel 53 und das Pleuel 54, während der Umschaltung in die erste Richtung und in eine zweite Richtung, die entgegen der ersten Richtung ist, bewegt. Somit ergibt sich, dass bei einer Umschaltung von einem Wählerkontakt 29A zu einem benachbarten Wählerkontakt 29B die Wählerstäbe 21, 25 in eine erste Richtung bewegt werden und der Lastumschalterstab 51 in die erste Richtung und in die zweite Richtung, die entgegen der ersten Richtung ist, bewegt wird.

Mit anderen Worten, sind der erste Wählerstab 21 und der zweite Wählerstab 25 parallel in einer Ebene angeordnet, der erste Wählerstab 21 und der Lastumschalterstab 51 parallel in einer Ebene angeordnet und der zweite Wählerstab 25 und der Lastumschalterstab 51 parallel in einer Ebene angeordnet; das beutet kollinear.

Bei einer Umschaltung werden die Wählerstäbe 21, 25 zeitlich versetzt in eine erste Richtung bewegt d.h. nach rechts oder links bzw. nach oben oder unten. Der Lastumschalterstab 51 wird hingegen bei einer Umschaltung in eine erste Richtung und eine zweite Richtung, die entgegen der ersten Richtung ist, bewegt d.h. nach rechts und nach links, oder umgekehrt, bzw. nach oben oder unten, oder umgekehrt.

Der Lastumschalterstab 51 kann jedoch auch mehrmals in die erste oder die zweite Richtung während einer Umschaltung bewegt werden. Dabei erfolgt der mehrmalige Richtungswechsel stets nacheinander.

Weiterhin ist es möglich den Lastumschalterstab 51 über ein teilverzahntes Getriebe und/oder ein Maltesergetriebe über die Antriebswelle 18 zu betätigen.

Der Lastumschalterstab 51 weist für die Betätigung jedes Schaltmittels 55 eine Nockenkontur 52 auf. In der hier beschriebenen Ausführungsform weist der Lastumschalterstab 51 drei Nockenkonturen 52 auf. Die Nockenkontur 52 dient der Betätigung des Schaltmittels 55, in diesem Beispiel der Betätigung einer Vakuumschaltröhre. Weiterhin betätigt der Lastumschalterstab 51 ein weiteres, zweites Schaltmittel 56. Dieses weitere bzw. zweite Schaltmittel 56 ist als Brückenschalter ausgebildet und umfasst einen ersten Kontakt 63 und eine zweiten Kontakt 64. Dabei sind die Kontakte 63, 64 mechanisch mit dem Lastumschalterstab 51 verbunden.

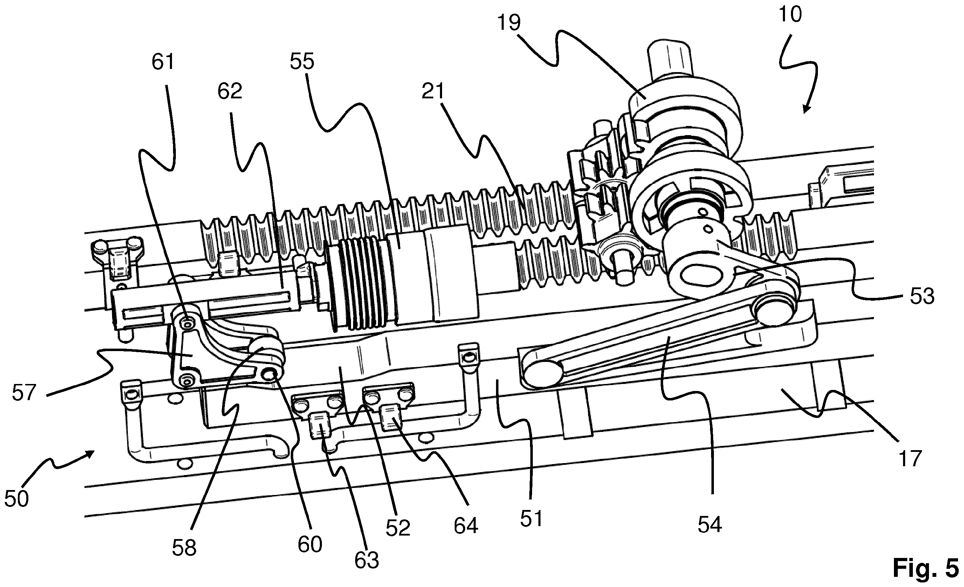

In FIG. 5 ist eine Ausführungsform des Lastumschalters 50 zur Betätigung des Schaltmittels 55 und des zweiten Schaltmittels 56 dargestellt. Dabei ist ein Umlenkhebel 57 zwischen dem Lastumschalterstab 51 und dem Schaltmittel 55 drehbar gelagert angeordnet. Ein erstes Ende 60 des Umlenkhebels 57 weist eine Rolle 58 auf, die die Nockenkontur 52 während der Bewegung des Lastumschalterstabes 51 zumindest teileweise abfährt. Das zweite Ende 61 des Umlenkhebels 57 ist mit dem Schaltmittel 55 mechanisch verbunden. In der hier gezeigten Ausführungsform wird der bewegliche Kontakt 62 des Schaltmittels 55, das als Vakuumschaltröhre ausgebildet ist, bewegt und die Vakuumschaltröhre geschlossen bzw. geöffnet. Die Betätigung der Schaltmittel 55 kann auch unmittelbar über den Lastumschalterstab 51 erfolgen. Dabei würden am beweglichen Kontakt 62 des Schaltmittels 55 eine Rolle 58 angebracht werden, die durch Abfahren der Nockenkontur 52 die Vakuumschaltröhre öffnet oder schließt.

Parallel dazu wird das zweite Schaltmittel 56 betätigt. Dabei werden die, am Lastumschalterstab 51 befestigten Kontakte 63, 64 des Brückenschalters auf Festkontakte geschoben bzw. von diesen getrennt.

Bei der Betätigung des Lastumschalters 50 wird also der Lastumschalterstab 51 einmal oder mehrmals in eine erste und zweite Richtung bewegt. Dabei werden die Schaltmittel 55, 56 einmal oder mehrmals betätigt, d.h. geöffnet oder geschlossen bzw. Festkontakte gebrückt durch Aufschieben oder getrennt durch Lösen. Die ist von der Umschaltsequenz abhängig.

Die Grundplatte 17 und/oder Antriebswelle 18 und/oder Getriebe 19 und/oder die Wählerstäbe 21, 25 und/oder die Antriebsritzel 31/35 und/oder die Abtriebsritzel 41/45 und/oder der Lastumschalterstab 51 und/oder die Kurbel 53 und/oder das Pleuel 54 und/oder der Umlenkhebel 57 und/oder die Rolle 58 sind aus einem elektrisch nicht leitfähigem Material wie z.B. Hartpapier oder GFK.

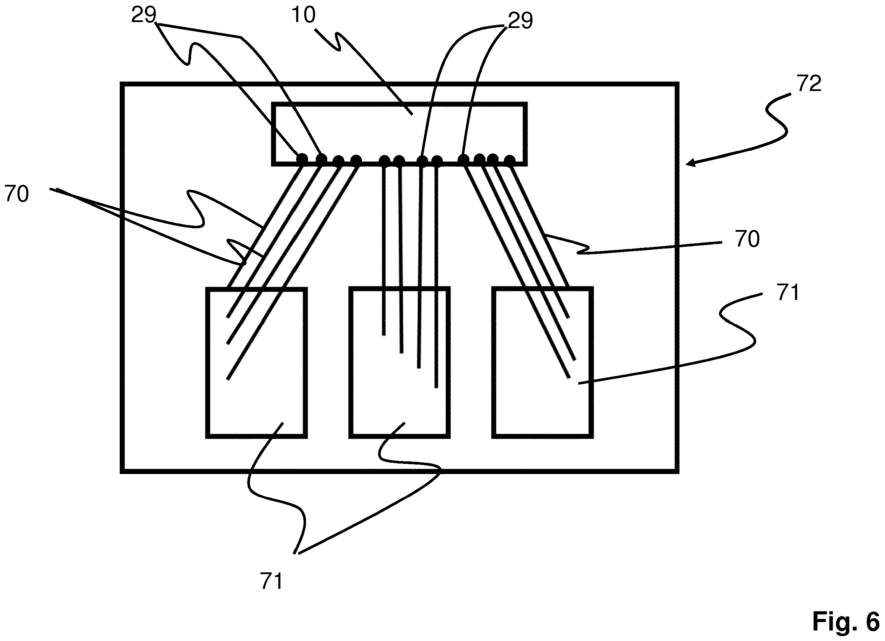

FIG. 6 zeigt eine schematische Darstellung eines Stufentransformators 72, insbesondere Ortsnetztransformators, mit dem erfindungsgemäßen Laststufenschalter 10. Die Wählerkontakte 29 sind mit Wicklungsanzapfungen 70 einer Regelwicklung 71 verbunden.

### BEZUGSZEICHEN

- 10: Laststufenschalter
- 17: Grundplatte
- 18: Antriebswelle
- 19: Getriebe
- 20: Wähler
- 21: erster Wählerstab
- 22: verzahnter Bereich von 21
- 25: zweiter Wählerstab
- 26: verzahnter Bereich vom 25
- 29: Wählerkontakte
- 29A: Wählerkontakte
- 29B: Wählerkontakte
- 30: Außenfläche von 31/35
- 31: erstes Antriebsritzel
- 32: erster Teil von 30
- 33: Kerbe
- 34: zweiter Teil von 30
- 35: zweites Antriebsritzel
- 36: Zähne von 31/35
- 40: Außenfläche von 41/45
- 41: erstes Abtriebsritzel
- 42: erster Teil von 40
- 43: vier Zähne
- 44: zweiter Teil von 40
- 45: zweites Abtriebsritzel
- 50: Lastumschalter
- 51: Lastumschalterstab
- 52: Nockenkontur
- 53: Kurbel
- 54: Pleuel
- 55: Schaltmittel
- 56: weiteres bzw. zweites Schaltmittel
- 57: Umlenkhebel
- 58: Rolle
- 60: erstes Ende von 57
- 61: zweites Ende von 57
- 62: beweglicher Kontakt
- 63: erster Kontakt von 56
- 64: zweiter Kontakt von 56
- 70: Wicklungsanzapfungen
- 71: Regelwicklung
- 72: Stufentransformator/Ortsnetztransformator

## Patentansprüche

1. Laststufenschalter (10), umfassend
- einen ersten Wählerstab (21) und einen zweiten Wählerstab (25);
- einen Lastumschalterstab (51);
- ein Schaltmittel (55);
- ein Getriebe (19);
wobei
- der erste Wählerstab (21), der zweite Wählerstab (25) und der Lastumschalterstab (51) kollinear angeordnet sind;
- das Getriebe (19) dazu eingerichtet ist
- die Wählerstäbe (21, 25) während einer Umschaltung von einem Wählerkontakt (29A) auf einen benachbarten Wählerkontakt (29B) in eine erste Richtung zu bewegen;
- den Lastumschalterstab (51) während der Umschaltung in die erste Richtung und eine zweite Richtung, die entgegen der ersten Richtung ist, zu bewegen um das Schaltmittel (55) zu betätigen.

2. Laststufenschalter (10) nach Anspruch 1, wobei
- das Getriebe (19) ein erstes Antriebsritzel (31) und ein erstes Abtriebsritzel (41) umfasst,
- eine Antriebswelle (18) den ersten Wählerstab (21) über das erste Antriebsritzel (31) und das erste Abtriebsritzel (41) während der Umschaltung bewegt.

3. Laststufenschalter (10) nach einem der vorhergehenden Ansprüche, wobei
- das Getriebe (19) ein zweites Antriebsritzel (35) und ein zweites Abtriebsritzel (45) umfasst,
- die Antriebswelle (18) den zweiten Wählerstab (25) über das zweite Antriebsritzel (35) und das zweite Abtriebsritzel (45) während der Umschaltung bewegt.

4. Laststufenschalter (10) nach einem der vorhergehenden Ansprüche, wobei
- das Getriebe (19) eine Kurbel (53) und ein Pleuel (54) umfasst,
- die Antriebswelle (18) den Lastumschalterstab (51) über die Kurbel (53) und das Pleuel (54) bewegt und damit das Schaltmittel (55) während der Umschaltung betätigt.

5. Laststufenschalter (10) nach einem der vorhergehenden Ansprüche, wobei
- der Lastumschalterstab (51) eine Nockenkontur (52) aufweist,
- das Schaltmittel (55) mit einem Umlenkhebel (57) mechanisch verbunden ist,
- das Schaltmittel (55) während der Umschaltung über den Umlenkhebel (57) und die Nockenkontur (52) betätigt wird.

6. Laststufenschalter (10) nach Anspruch 5, wobei
- der Umlenkhebel (57) die Nockenkontur (52) während der Betätigung des Schaltmittels (55) zumindest teilweise abfährt.

7. Laststufenschalter (10) nach einem der vorhergehenden Ansprüche, wobei
- das Getriebe (19) dazu eingerichtet ist während der Umschaltung ein weiteres Schaltmittel (56) zu betätigen.

8. Laststufenschalter (10) nach einem der vorhergehenden Ansprüche, wobei
- der Lastumschalterstab (51) das weitere Schaltmittel (56) umfasst.

9. Laststufenschalter (10) nach Anspruch 7 oder 8, wobei
- das weitere Schaltmittel (56) wenigstens einen Kontakt (63, 64) umfasst, der als Brückenschalter ausgebildet ist.

10. Laststufenschalter (10) nach einem der vorhergehenden Ansprüche, wobei
- das Getriebe (19) dazu eingerichtet ist während der Umschaltung den ersten Wählerstab (21) in die erste Richtung zu bewegen, danach den Lastumschalterstab (51) in die erste und die zweite Richtung zu bewegen und danach den zweiten Wählerstab (25) in die erste Richtung zu bewegen.

11. Laststufenschalter (10) nach einem der vorhergehenden Ansprüche, wobei
- das Getriebe (19) dazu eingerichtet ist während der Umschaltung den Lastumschalterstab (51) mehrmals in die erste und/oder mehrmals die zweite Richtung zu bewegen.

12. Laststufenschalter (10) nach einem der vorhergehenden Ansprüche, wobei
- der Lastumschalterstab (51) während der Umschaltung des Schaltmittel (55) öffnet und schließt.

13. Laststufenschalter (10) nach einem der vorhergehenden Ansprüche, wobei
- das Getriebe (19) als Maltesergetriebe ausgebildet ist.

14. Laststufenschalter(10) nach einem der vorhergehenden Ansprüche, umfassend
- einen Lastumschalter (50) mit
• drei Schaltmitteln (55) die als Vakuumschaltröhre ausgebildet sind,
• drei weiter Schaltmitteln (5) die als Brückenschalter ausgebildet sind,
• einem Lastumschalterstab (51)
- einen Wähler (20) mit
• einem ersten und einem zweiten Wählerstab (21, 25)
- ein Getriebe (19) welches
• den Lastumschalter (50) und den Wähler (20) betätigt.

15. Ortsnetztransformator, umfassend
- einen Laststufenschalter nach einem der Ansprüche 1-14.

## Claims

1. On-load tap changer (10) comprising
- a first selector rod (21) and a second selector rod (25);
- a load changeover-switch rod (51);
- a switching means (55);
- a transmission (19);
wherein
- the first selector rod (21), the second selector rod (25) and the load changeover-switch rod (51) are arranged collinearly;
- the transmission (19) is arranged for the purpose of
- moving the selector rods (21, 25) during changeover from one selector contact (29A) to an adjacent selector contact (29B) in a first direction;
- moving the load changeover-switch rod (51) during the changeover in the first direction and a second direction which is opposite to the first direction so as to actuate the switching means (55).

2. On-load tap changer (10) according to claim 1, wherein
- the transmission (19) comprises a first drive input pinion (31) and a first drive output pinion (41),
- a drive shaft (18) moves the first selector rod (21) by way of the first drive input pinion (31) and the first drive output pinion (41) during the changeover.

3. On-load tap changer (10) according to one of the preceding claims, wherein
- the transmission (19) comprises a second drive input pinion (35) and a second drive output pinion (45),
- the drive shaft (18) moves the second selector rod (25) by way of the second drive input pinion (35) and the second drive output pinion (45) during the changeover.

4. On-load tap changer (10) according to any one of the preceding claims, wherein
- the transmission (19) comprises a crank (53) and a connecting rod (54),
- the drive shaft (18) moves the load changeover-switch rod (51) by way of the crank (53) and the connecting rod (54) and thus actuates the switching means (55) during the changeover.

5. On-load tap changer (10) according to any one of the preceding claims, wherein
- the load changeover-switch rod (51) has a cam profile (52),
- the switching means (55) is mechanically connected with a deflecting lever (55),
- the switching means (55) is actuated by way of the deflecting lever (57) and the cam profile (52) during the changeover.

6. On-load tap changer (10) according to claim 5, wherein
- the deflecting lever (57) travels at least partly along the cam profile (52) during actuation of the switching means (55).

7. On-load tap changer (10) according to any one of the preceding claims, wherein
- the transmission (19) is arranged for the purpose of actuating a further switching means (56) during the changeover.

8. On-load tap changer (10) according to any one of the preceding claims, wherein
- the load changeover-switch rod (51) comprises the further switching means (56).

9. On-load tap changer (10) according to claim 7 or 8, wherein
- the further switching means (56) comprises at least one contact (63, 64), which is configured as a bridge switch.

10. On-load tap changer (10) according to any one of the preceding claims, wherein
- the transmission (19) is arranged for the purpose of moving the first selector rod (21) in the first direction during the changeover, thereafter moving the load changeover-switch rod (51) in the first and second directions and thereafter moving the second selector rod (25) in the first direction.

11. On-load tap changer (10) according to any one of the preceding claims, wherein
- the transmission (19) is arranged for the purpose of moving the load changeover-switch rod (51) several times in the first direction and/or several times in the second direction during the changeover.

12. On-load tap changer (10) according to any one of the preceding claims, wherein
- the load changeover-switch rod (51) opens and closes the switching means (55) during the changeover.

13. On-load tap changer (10) according to any one of the preceding claims, wherein
- the transmission (19) is configured as a Geneva transmission.

14. On-load tap changer (10) according to any one of the preceding claims, comprising
- a load-changeover switch (50) with
• three switching means (55), which are constructed as vacuum interrupters,
• three further switching means (5), which are constructed as bridge switches,
• a load changeover-switch rod (51),
- a selector (20) with
• a first and a second selector rod (21, 25)
- a transmission (19) which
• actuates the load changeover switch (50) and the selector (20).

15. Local mains transformer comprising
- an on-load tap changer according to any one of claims 1 to 14.

## Revendications

1. Régleur en charge (10), comprenant
- une première barre de sélection (21) et une deuxième barre de sélection (25) ;
- une barre de commutateur de réglage en charge (51) ;
- un moyen de commutation (55) ;
- un engrenage (19) ;
dans lequel
- la première barre de sélection (21), la deuxième barre de sélection (25) et la barre de commutateur de réglage en charge (51) sont disposées de manière colinéaire ;
- l'engrenage (19) est conçu pour
- déplacer les barres de sélection (21, 25) pendant une commutation d'un contact de sélection (29A) à un contact de sélection voisin (29B) dans une première direction ;
- déplacer la barre de commutateur de réglage en charge (51) pendant la commutation dans la première direction et dans une deuxième direction qui est opposée à la première direction, afin d'actionner le moyen de commutation (55).

2. Régleur en charge (10) selon la revendication 1, dans lequel
- l'engrenage (19) comprend un premier pignon d'entraînement (31) et un premier pignon de sortie (41),
- un arbre d'entraînement (18) déplace la première barre de sélection (21) par l'intermédiaire du premier pignon d'entraînement (31) et du premier pignon de sortie (41) pendant la commutation.

3. Régleur en charge (10) selon l'une quelconque des revendications précédentes, dans lequel
- l'engrenage (19) comprend un deuxième pignon d'entraînement (35) et un deuxième pignon de sortie (45),
- l'arbre d'entraînement (18) déplace la deuxième barre de sélection (25) par l'intermédiaire du deuxième pignon d'entraînement (35) et du deuxième pignon de sortie (45) pendant la commutation.

4. Régleur en charge (10) selon l'une quelconque des revendications précédentes, dans lequel
- l'engrenage (19) comprend une manivelle (53) et une bielle (54),
- l'arbre d'entraînement (18) déplace la barre de commutateur de réglage en charge (51) par l'intermédiaire de la manivelle (53) et de la bielle (54) et actionne ainsi le moyen de commutation (55) pendant la commutation.

5. Régleur en charge (10) selon l'une quelconque des revendications précédentes, dans lequel
- la barre de commutateur de réglage en charge (51) présente un contour de came (52),
- le moyen de commutation (55) est relié mécaniquement à un levier de renvoi (57),
- le moyen de commutation (55) est actionné pendant la commutation par l'intermédiaire du levier de renvoi (57) et du contour de came (52).

6. Régleur en charge (10) selon la revendication 5, dans lequel
- le levier de renvoi (57) suit au moins partiellement le contour de came (52) pendant l'actionnement du moyen de commutation (55).

7. Régleur en charge (10) selon l'une quelconque des revendications précédentes, dans lequel
- l'engrenage (19) est conçu pour actionner un moyen de commutation supplémentaire (56) pendant la commutation.

8. Régleur en charge (10) selon l'une quelconque des revendications précédentes, dans lequel
- la barre de commutateur de réglage en charge (51) comprend le moyen de commutation supplémentaire (56) .

9. Régleur en charge (10) selon la revendication 7 ou 8, dans lequel
- le moyen de commutation supplémentaire (56) comprend au moins un contact (63, 64) qui est réalisé sous la forme d'un commutateur en pont.

10. Régleur en charge (10) selon l'une quelconque des revendications précédentes, dans lequel
- l'engrenage (19) est conçu pour déplacer pendant la commutation la première barre de sélection (21) dans la première direction, puis la barre de commutateur de réglage en charge (51) dans la première et la deuxième direction, et puis la deuxième barre de sélection (25) dans la première direction.

11. Régleur en charge (10) selon l'une quelconque des revendications précédentes, dans lequel
- l'engrenage (19) est conçu pour déplacer pendant la commutation la barre de commutateur de réglage en charge (51) à plusieurs reprises dans la première direction et/ou à plusieurs reprises dans la deuxième direction.

12. Régleur en charge (10) selon l'une quelconque des revendications précédentes, dans lequel
- la barre de commutateur de réglage en charge (51) s'ouvre et se ferme pendant la commutation du moyen de commutation (55).

13. Régleur en charge (10) selon l'une quelconque des revendications précédentes, dans lequel
- l'engrenage (19) est réalisé sous la forme d'un engrenage à croix de Malte.

14. Régleur en charge (10) selon l'une quelconque des revendications précédentes, comprenant
- un commutateur de réglage en charge (50) pourvu
• de trois moyens de commutation (55) qui sont réalisés sous la forme de tubes commutateurs à vide,
• de trois moyens de commutation supplémentaires (5) qui sont réalisés sous la forme de commutateurs en pont,
• d'une barre de commutateur de réglage en charge (51),
- un sélecteur (20) pourvu
• d'une première et d'une deuxième barre de sélection (21, 25),
- un engrenage (19) qui
• actionne le commutateur de réglage en charge (50) et le sélecteur (20).

15. Transformateur de réseau local, comprenant
- un régleur en charge selon l'une quelconque des revendications 1 à 14.
